# EUROPEAN PATENT APPLICATION

(11) **EP 4 280 326 A1**
(43) Date of publication of application: **22.11.2023**
(21) Application number: 21919850.4
(22) Date of filing: 03.11.2021
(51) Int. Cl.: H01M 10/04

(54) **SECONDARY BATTERY MANUFACTURING METHOD**

(30) Priority: 13.01.2021 KR 20210004892
(71) Applicant: LG Electronics, Inc., Yeongdeungpo-gu Seoul 07336 (KR)
(72) Inventor: CHAE, Byungsu, Seoul 06772 (KR); YI, Changheon, Seoul 06772 (KR)
(74) Representative: Frenkel, Matthias Alexander
(86) International application number: PCT/KR2021/015829
(87) International publication number: WO 2022/154226

(57) **Abstract**

According to the present embodiment, a method for manufacturing a rechargeable battery includes performing a cell unit manufacturing process of manufacturing a unit cell unit by stacking a plurality of unit cells, and performing a cell module manufacturing process of manufacturing a unit cell module by stacking a plurality of unit cell units manufactured in the cell unit manufacturing process. The cell unit manufacturing process and the cell module manufacturing process are independently performed.

## Description

### [Technical Field]

The present disclosure relates to a method for manufacturing a rechargeable battery.

### [Background Art]

A rechargeable battery refers to a battery which may be repeatedly used by charging even after discharging. In other words, the rechargeable battery serves as a battery to repeat charging and discharging, and includes an anode, a cathode, an electrolyte, a separator, and a container. Electricity is generated through an electrical flow in which lithium ions move through an electrolyte between a cathode material and an anode material.

In a rechargeable battery module process, to satisfy power suitable for a use purpose, a battery module is manufactured by stacking a plurality of cells having a specific rated voltage value and a specific rated current value, connecting the plurality of cells to each other in parallel or in series, and then inserting the stacked cell bundle into a frame or a cover.

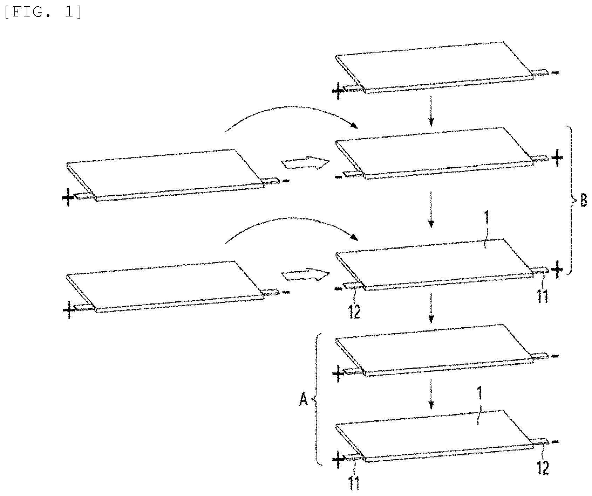

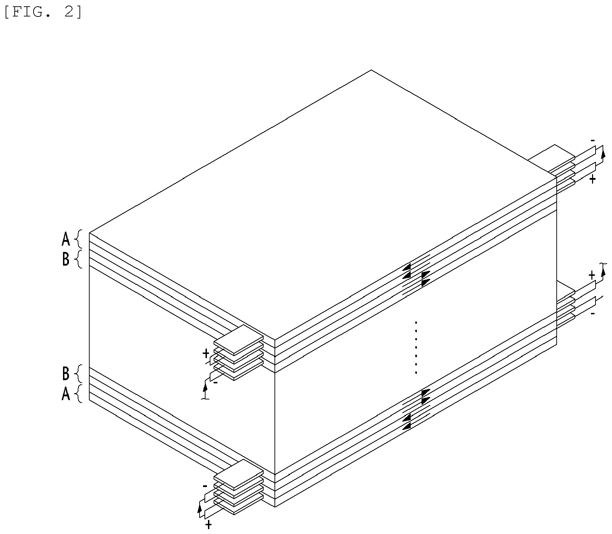

FIG. 1 is a process diagram illustrating a cell stacking process performed in a conventional rechargeable battery module process, and FIG. 2 is a view illustrating a rechargeable battery module in the state in which electrode connection is completed in the conventional rechargeable battery module process.

Referring to FIGS. 1 and 2, the rechargeable battery module process includes a cell stacking process of stacking a plurality of cells 1, each of which has a specific voltage value and a specific current value and includes a cathode lead 11 and an anode lead 12 at opposite ends thereof.

In detail, the cell stacking process includes a first cell parallel stack process (P-stack) in which the set number of cells are stacked, such that electrode leads having the same polarity are stacked at the same point, and a second cell parallel stack process in which the cells are first reversed 180 degrees about an x-axis or y-axis and the set number of cells are sacked. The first cell parallel stack process and the second cell parallel stack process are alternately performed.

When the cell stacking process is finished, as illustrated in FIG. 2, the set number of the same electrodes and the set number of opposite electrodes are alternately placed in the stacking direction. For example, when the cell stacking process is finished, a parallel cell unit A including cathode leads disposed at one edge, and a reversal parallel cell unit B including cathode leads disposed at an opposite edge are alternately disposed in the stacking direction.

In this state, the parallel cell units A and B are connected to each other in parallel through a bus bar assembly process, and the parallel unit cell unit A and the reversal parallel cell unit B are connected to each other in series.

The cell units after the bus bar assembly step is finished are inserted into a frame or a cover to complete the rechargeable battery module.

In the conventional cell stacking process, since a process of reversing the direction of the cells is performed by the number of times corresponding to half of the number of cells stacked, the process time is increased and the length of the production line is increased.

In addition, even if a defect occurs in one cell during the stack process, the entire portion of the module has to be processed as being defective and discharged, which causes a decrease in productivity.

In addition, a pouch type cell has the risk of a fire, as the cathode lead and the anode lead make contact with each other to make a short circuit due to the flexible characteristics of the cathode lead and the anode lead in the second cell parallel stack process of stacking cells by reversing the cells,

### [Disclosure]

### [Technical Problem]

The present disclosure is suggested to overcome the above problems.

### [Technical Solution]

To accomplish the above object, according to an embodiment of the present disclosure, a method for manufacturing a rechargeable battery includes a cell unit manufacturing process of manufacturing a unit cell unit by stacking a plurality of unit cells and a cell module manufacturing process of manufacturing a unit cell module by stacking a plurality of unit cell units manufactured in the cell unit manufacturing process. The cell unit manufacturing process and the cell module manufacturing process are independently performed.

### [Advantageous Effects]

According to an embodiment of the present disclosure, which has the configuration, the method for manufacturing the rechargeable includes a cell stacking process, in which the same electrodes are stacked to be concentrated at one side, such that the same electrode leads are connected to each other in parallel at one side, and a cell unit stacking process in which a plurality of parallel cell units are stacked, and opposites electrodes are alternately placed in the stacking direction, such that the opposite electrodes are connected to each other in series at one side. The cell stacking process and the cell unit stacking process are separately performed.

Accordingly, since the defect of the cell may be detected in the cell stacking process, only the defective parallel cell unit is discarded. Accordingly, the unit of removing the defect may be minimized. In other words, when compared to the conventional manufacturing method in which the whole cell module is discharged, the productivity may be remarkably improved.

In addition, the cell stacking process and the cell unit stacking process are separately performed, and the reversing process is performed only in the cell unit stacking process. The number of times for the reversing process may be reduced to the half of the number of cell unit stacks. Accordingly, the production process is remarkably reduced, and the size of the equipment is reduced, such that the production line is reduced.

In addition, as long as the maintenance against the short circuit is performed only in the cell unit stacking process having the reversing process, the risk of the fire in the production process is remarkably reduced. Accordingly, the risk management point may be minimized in the production site requiring preventing the fire.

### [Description of Drawings]

FIG. 1 is a process diagram illustrating a cell stacking process performed in a conventional rechargeable battery module process.
FIG. 2 is a view illustrating a rechargeable battery module in the state in which electrode connection is completed in a conventional rechargeable battery module process.
FIG. 3 is a flowchart schematically illustrating a method for manufacturing a rechargeable battery according to an embodiment of the present disclosure.
FIG. 4 is a flowchart illustrating a cell stacking process in a method for controlling a rechargeable battery according to an embodiment of the present disclosure.
FIG. 5 is a process diagram illustrating a cell stacking process.
FIG. 6 is a flowchart illustrating a cell unit stacking process constituting a method for manufacturing a rechargeable battery according to an embodiment of the present disclosure.
FIG. 7 is a process diagram illustrating a cell unit stacking process.
FIG. 8 is a view illustrating a cell module in the state in which cell unit stacking is completed.

### [Best Mode]

### [Mode for Invention]

Hereinafter, a method for manufacturing a rechargeable battery according to an embodiment of the present disclosure will be described in detail with reference to the drawings.

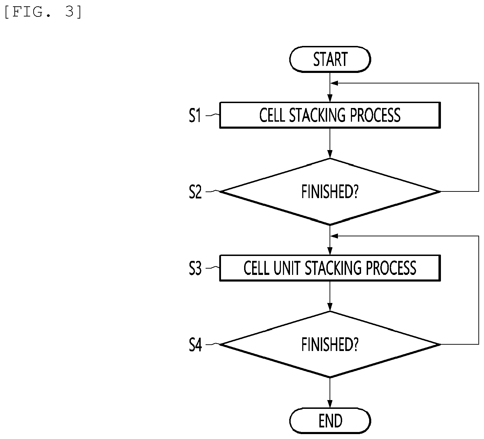

FIG. 3 is a flowchart schematically illustrating a method for manufacturing a rechargeable battery according to an embodiment of the present disclosure.

Referring to FIG. 3, the method for manufacturing a rechargeable battery according to an embodiment of the present disclosure includes cell stacking processes S1 and S2, in which the specific number of cells are connected in parallel, and cell unit stacking processes S3 and S4 in which a plurality of cell units produced in the cell stacking processes are connected to each other in series.

According to the flowchart, when the cell stacking process is completed, the cell unit stacking process is performed, but the present disclosure is not limited thereto. In other words, the cell stacking process and the cell unit stacking process may be independently performed in separate places, and a cell unit produced through the cell stacking process may be transferred to a production line, in which the cell unit stacking process is performed, through a transfer unit such as a conveyor or a hoist.

In this case, the cell unit may be defined as a product manufactured with the specific number of unit cells which are stacked in the form of arranging the same electrodes in the stacking direction, such that the same electrode leads are connected to each other in parallel at one edge of the cell unit.

The cell stacking processes S1 and S2 may be defined as cell unit manufacturing processes, or the cell unit stacking processes may be defined as cell module manufacturing processes.

Hereinafter, each of the cell stacking processes S1 and S2 and the cell unit stacking processes S3 and S4 will be described in detail with reference to the drawings and flowcharts.

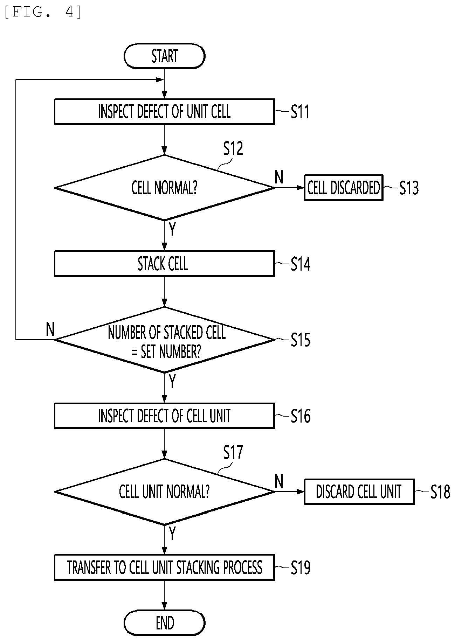

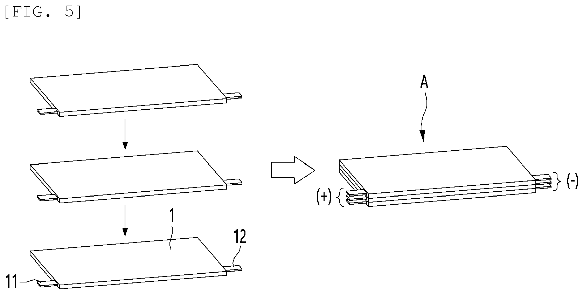

FIG. 4 is a flowchart illustrating a cell stacking process in a method for controlling a rechargeable battery according to an embodiment of the present disclosure, and FIG. 5 is a process diagram illustrating a cell stacking process.

Referring to FIGS. 4 and 5, the cell stacking process according to an embodiment of the present disclosure may be understood as a unit cell stacking process for facilitating parallel connection of the same electrode leads during a bus bar assembly process, such that the same electrodes are concentrated and stacked at one side.

In detail, when the cell stacking process starts, a unit cell defect inspecting step (S11) of inspecting whether a unit cell 1 is defective. A defect inspection for the unit cell may include, for example, a process of determining whether a cell average voltage value of the unit cell is equal to a set reference voltage value.

In the unit cell defect inspecting step, when a relevant cell is determined as being normal (S12), the cell is transferred to a stacking place for stacking the cell (S14). When the cell is determined as being defective, the cell is transferred to a cell discarding place for discarding the cell (S13).

In addition, it is determined whether the number of stacked cells corresponds to a set number satisfying a condition for forming the unit cell unit A (S15) . In general, the unit cell unit is formed by stacking two to four unit cells 1, and the cells constituting the unit cell unit have the same electrode leads arranged in the stacking direction.

For example, the cathode leads 11 are arranged vertically at the same position in a left-right direction of one side part of the unit cell unit A, and the anode leads 12 are arranged vertically at the same position in the left-right direction of an opposite side part of the unit cell unit A.

In addition, the cathode lead 11 and the anode lead 12 may be formed at positions facing each other or being symmetrical to each other about a surface bisecting the longer side of the unit cell 1.

In detail, when it is determined that the condition for completing the unit cell unit A is satisfied, as the number of cells stacked corresponds to the set number satisfying the condition for forming the unit cell unit A, a step (S16) of inspecting the defect of the unit cell A is performed.

In the cell unit defect inspecting step, when it is determined that a cell unit is normal (S17), the cell unit is transferred to the cell unit stacking process (S19). When it is determined that the cell unit is defective, the cell unit is transferred to a process of discharging the cell unit (S18).

The unit cell stacking process may be continuously performed until the number of unit cell units A manufactured reaches a set number, or a command of stopping a production line is input. In addition, the cell stacking process may be performed on a production line independent of the cell unit stacking process, and then transferred to the cell unit stacking process by a transfer member. Alternatively, as a production line for the cell unit stacking process is placed at the end of a production line of the cell stacking process to be next to a production line for the cell stacking process. Accordingly, the cell stacking process and the cell unit stacking process are consecutively performed through one production line.

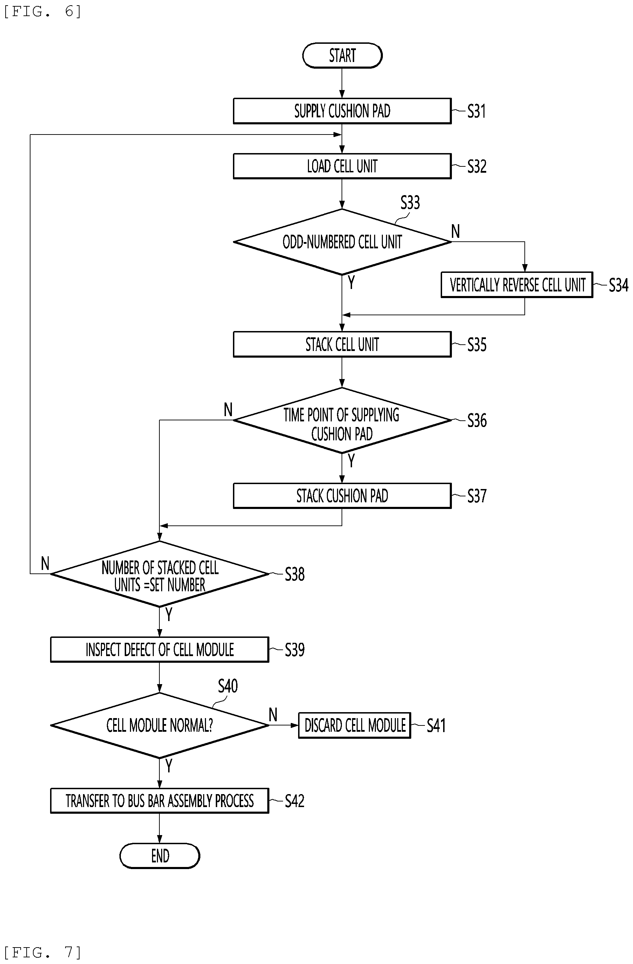

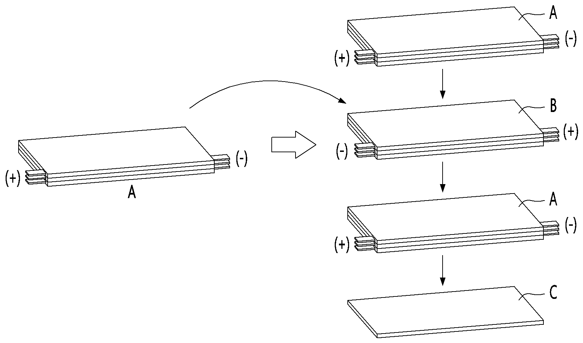

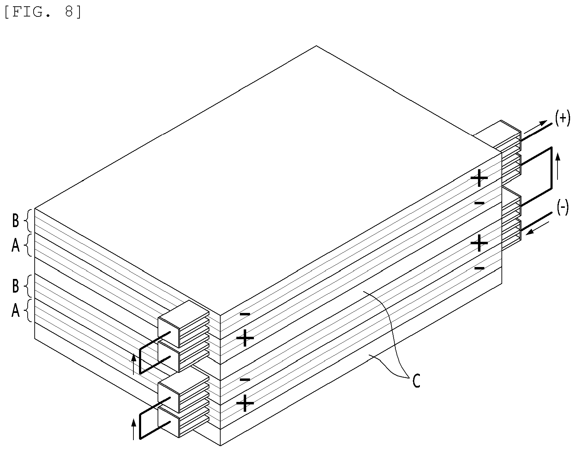

FIG. 6 is a flowchart illustrating a cell unit stacking process constituting a method for manufacturing a rechargeable battery according to an embodiment of the present disclosure, FIG. 7 is a process diagram illustrating a cell unit stacking process, and FIG. 8 is a view illustrating a cell module in the state that the stacking of the cell unit is completed.

Referring to FIGS. 6 to 8, in the cell unit stacking process, a cushion pad C is appropriately interposed between adjacent cell units. In other words, the set number of cell units and the set number of cushion pads C are stacked to complete a unit cell module, and the unit cell module is received in a frame or a case.

In detail, when the cell unit stacking process starts, the cushion pad C is supplied (S31), to be disposed at the lowermost side, thereby absorbing expansion of the cell during charging and discharging, and absorbing the impact from the outside.

Subsequently, the unit cell unit, which is in a normal state and has passed through the cell stacking process, is supplied and loaded onto the cushion pad C (S32).

In addition, it is determined whether the loaded cell unit is an odd-numbered cell unit or an even-numbered cell unit (S33), such that a positive electrode and a negative electrode of loaded cell units are alternatively stacked

For example, when the loaded unit cell unit A is the odd-numbered cell unit, the cell unit is stacked while maintaining a loading state (S35), and when the cell unit is the even-numbered cell unit, the cell unit is vertically reversed and stacked (S34).

That the cell unit is vertically reversed refers to that the cell unit rotates 180 degrees about a reversing axis, such that the positions of the cathode and the anode are changed. The reversing axis may be understood as an axis for bisecting the longer side of the cell unit. Therefore, the positive electrode and the negative electrode of the cell unit are positioned at points symmetrical to each other about the reversing axis.

In addition, it is determined whether a time point to supply a cushion pad comes after the cell unit is stacked (S36). When it is determined that the time point to supply the cushion pad comes, the cushion pad is stacked (S37), and a new cell unit is stacked while maintaining the loading state or stacked in a reversing state.

The cushion pad C may be supplied after the set number of cell units are stacked. For example, after two or three cell units are stacked, the cushion pad C may be stacked.

In addition, the cushion pad C may be essentially placed on the top surface of the last cell unit of the required number of cell units to complete one cell module. Then, the cushion pad C is basically placed on the upper and lower ends of the cell module, such that the cushion pad C absorbs external impact.

In addition, it is determined whether the number of cell units, which are stacked to the time point for stacking the cushion pads, reaches the set number satisfying the condition for completing the cell module (S38).

In detail, when it is determined that the number of cell units, which are stacked, fails to reach the set number, the cell unit loading step is returned, such that the cell unit is additionally stacked. To the contrary, when it is determined that the number of the stacked cell units satisfies the set number, the step of inspecting the defect of the cell module is performed (S39).

In other words, in the state that the required number of cell units are stacked to complete the unit cell module, a defect determining process of determining the defect of the unit cell or the unit cell unit may be identically applied to a defect inspection step for the unit cell module.

When it is determined that the manufactured unit cell module is normal (S40), the unit cell module is transferred to the bus bar assembly process (S42), and when it is determined that the manufactured unit cell module is defective, the manufactured unit cell module is transferred to a rework process or a discard process (S41).

As illustrated in FIG. 8, the set number of unit cells are stacked to form one unit cell unit, and the set number of unit cell units are stacked to form one cell module.

Further, in the bus bar assembly process, an electrode parallel connection process of electrically connecting the plurality of unit cells constituting the unit cell unit and an electrode series-connection process of electrically connecting the plurality of unit cell units constituting the unit cell module to each other in series may be simultaneously or sequentially performed.

According to the bus bar assembly process, the current value of the unit cell unit is maintained to be equal to the current value of the unit cell, and the voltage value of the unit cell unit is increased by the number of stacked unit cells. In addition, the voltage value of the unit cell module is maintained to be equal to the voltage value of the unit cell unit, but the current value of the unit cell module is increased by the number of stacked unit cell units. Accordingly, a rated voltage value and a rated current value of the unit cell module are determined.

According to the method for manufacturing the rechargeable battery according to the present disclosure, since cell reversal (electrode reversal) is not performed in the process of manufacturing the cell units, that is, in the step of stacking the unit cells, a fire is hardly caused due to the short between the electrode leads. Accordingly, as long as the risk of a fire resulting from the short between the electrode leads is managed in the manufacturing process of a unit cell module, that is, the cell unit stacking process, the risk managing point of the production line may be minimized.

In addition, the cell reversal (or the electrode reversal) is not required in the process of stacking the unit cell, but the electrode reversal is performed only in the cell unit stacking process. Accordingly, the time for manufacturing the cell module may be remarkably reduced.

In addition, since a defect is sufficiently inspected in the step of supplying the unit cell and the step of completing the cell unit, in the manufacturing process of the unit cell unit. Accordingly, the phenomenon of discarding the whole cell module due to the defective unit cell or the defective unit cell unit may be minimized. Accordingly, the manufacturing costs may be remarkably reduced.

In other words, when the unit cell or the unit cell unit is defective, the defect is substantially completely removed in the step of supplying the unit cell or the step of manufacturing the unit cell unit. Accordingly, the productivity, which is degraded as the completed cell module is discarded, may be minimized.

In addition, conventionally, the unit cell stacking process partially constitutes the cell module manufacturing process. Accordingly, when a problem is caused or the defect is made in the cell stacking process, which corresponds to the unit cell manufacturing process, the whole cell module manufacturing process cannot but to be stopped. However, according to the present disclosure, the cell unit manufacturing process of producing a unit cell unit and the cell module manufacturing process of producing a cell module by stacking a plurality of cell units produced are separated from each other to form independent production processes. Accordingly, even if the problem is caused in the cell unit manufacturing process, the cell module manufacturing process may be continuously performed without any influence.

## Claims

1. A method for manufacturing a rechargeable battery, the method comprising:
performing a cell unit manufacturing process of manufacturing a unit cell unit by stacking a plurality of unit cells; and
performing a cell module manufacturing process of manufacturing a unit cell module by stacking a plurality of unit cell units manufactured in the cell unit manufacturing process,
wherein the cell unit manufacturing process and the cell module manufacturing process are independently performed.

2. The method for claim 1, wherein a plurality of unit cells, which are loaded at a stacking point, are stacked while maintaining a loading state without an electrode reversed, such that same electrodes are arranged in a stacking direction, in the cell unit manufacturing process.

3. The method for claim 2, wherein the unit cell loaded at the stacking point and a unit cell unit having an electrode reversed after loaded are alternately stacked, in the cell module manufacturing process.

4. The method for claim 3, wherein a process of interposing a cushion pad between adjacent unit cell units is performed at least one time in the cell module manufacturing process.

5. The method for claim 3 or claim 4, wherein a cushion pad is placed in at least one side of a lower portion of the lowermost unit cell and an upper portion of the upper-most unit cell, in the cell module manufacturing process.

6. The method for claim 1, wherein a defect of a unit cell supplied and a defect of a cell unit manufactured are inspected in the cell unit manufacturing process.

7. The method for claim 6, wherein a defect of the cell module manufactured is inspected, in the cell module manufacturing process.

8. The method for claim 1, wherein the performing of the cell unit manufacturing process includes:
loading the unit cell and inspecting a defect of the loaded unit cell; and
stacking only the unit cell determined as being normal.

9. The method for claim 8, wherein the unit cell determined as being normal is stacked while maintaining a loading state.

10. The method for claim 8, wherein the performing of the cell unit manufacturing process further includes:
determining whether a number of the unit cells stacked satisfies a set number,
wherein the unit cell unit is completed, when the number of the unit cells stacked satisfies the set number.

11. The method for claim 10, wherein the performing of the cell unit manufacturing process further includes:
inspecting a defect of the unit cell unit completed,
wherein the unit cell unit determined as being normal is transferred to the cell module manufacturing process.

12. The method for claim 11, wherein a unit cell and a unit cell unit determined as being defective are transferred to a discard process.

13. The method for claim 11, wherein the cell module manufacturing process includes:
supplying a cushion pad;
loading a unit cell unit;
determining whether an electrode of a loaded unit cell unit is reversed; and
stacking the loaded unit cell unit.

14. The method for claim 13, wherein a unit cell unit, which is in a state the same as the loading state, and a unit cell unit having an electrode reversed after loaded are alternately stacked, in the cell module manufacturing process.

15. The method for claim 14, wherein the performing of the cell module manufacturing process further includes:
supplying a cushion pad between adjacent unit cell units.

16. The method for claim 14 or claim 15, wherein the performing of the cell module manufacturing process further includes:
determining whether a number of the unit cell unit stacked satisfies a set number; and
determining whether the unit cell module is completed, when the number of the unit cell units stacked satisfies the set number.

17. The method for claim 16, wherein a cushion pad is supplied to a top surface of the upper most unit cell unit, when the unit cell module is completed.

18. The method for claim 16, wherein the performing of the cell module manufacturing process further includes:
inspecting a defect of the unit cell module completed.

19. The method for claim 18, wherein a unit cell module determined as being normal is transferred to a bus bar assembly process, and
wherein electrically connecting the plurality of unit cells constituting the unit cell unit to each other in parallel and electrically connecting the plurality of unit cell units constituting the unit cell module in series are simultaneously or sequentially performed in the bus bar assembly process.

20. The method for claim 18, wherein a unit cell module determined as being defective is transferred to a discard process.
